# EUROPEAN PATENT APPLICATION

(11) **EP 4 398 340 A1**
(43) Date of publication of application: **10.07.2024**
(21) Application number: 23793985.5
(22) Date of filing: 21.08.2023
(51) Int. Cl.: H01M 4/36

(54) **COATED TERNARY POSITIVE ELECTRODE MATERIAL, AND PREPARATION METHOD THEREFOR AND USE THEREOF**

(30) Priority: 24.11.2022 CN 202211479555
(71) Applicant: Tianjin B&M Science And Technology Co., Ltd., Tianjin 300384 (CN)
(72) Inventor: DAI, Lingling, Binhai New Area Tianjin 300384 (CN); SHI, Kaimin, Binhai New Area Tianjin 300384 (CN); YU, Limei, Binhai New Area Tianjin 300384 (CN); LV, Fei, Binhai New Area Tianjin 300384 (CN); XU, Ning, Binhai New Area Tianjin 300384 (CN)
(74) Representative: Meroni, Francesca
(86) International application number: PCT/CN2023/114098
(87) International publication number: WO 2024/109204

(57) **Abstract**

The present disclosure relates to the technical field of lithium ion batteries, and in particular to a coated ternary cathode material, and a preparation method and application thereof. The coated ternary cathode material includes a ternary cathode material and a coating layer on a surface of the ternary cathode material, wherein the coating layer includes a layer of cobalt compound chemically modified by alumina. In the coating layer, a molar ratio of the alumina to the cobalt compound is (0.001-2):100. The coated ternary cathode material provided above can improve the specific capacity and cycle performance of the battery.

## Description

### Cross-reference to Related Applications

The present disclosure claims the priority to the Chinese patent application with the filing No. 202211479555.X filed with the Chinese Patent Office on November 24, 2022, and entitled "Coated Ternary Cathode Material, and Preparation Method and Application Thereof", the contents of which are incorporated herein by reference in entirety.

### Technical Field

The present disclosure relates to the technical field of lithium ion batteries, and in particular to a coated ternary cathode material, and a preparation method and an application thereof.

### Background Art

Ternary cathode materials have the advantages of traditional cathode materials such as LiNiO₂, LiCoO₂ and LiMnO₂, have more stable structures and excellent electrochemical performances, and have great commercial values. However, in practical applications, ternary cathode materials still face many problems, such as strong water absorption and poor storage performance of the material, which seriously affect their industrial production, storage, transportation and battery preparation process. Taking electrode fabricating as an example, ternary cathode materials are likely to absorb water and form a gel when preparing slurry, which leads to poor machinability. In addition, the rate performance of layered ternary cathode materials still needs to be improved because of their low lithium ion diffusion coefficient and electron conductivity. On the other hand, in the process of lithium deintercalation of ternary cathode materials, Ni⁴⁺ reacts with the electrolytic solution, which easily leads to the phase transition from the layered structure to the molten salt structure, and leads to the increase of impedance of ternary cathode materials and the deterioration of cycle performance. Moreover, in the charge-discharge range of 2.7 V to 4.3 V, the first irreversible capacity of ternary cathode materials is as high as 30 mAh/g to 40 mAh/g or even higher, and the efficiency is generally lower than 85%.

At present, the solid-phase method is widely used to coat non-electrochemically active simple oxides (such as TiO₂, Al₂O₃, ZrO₂, MnO₂, MoOs, CeO₂, etc.) to modify ternary cathode materials, but this method cannot fundamentally solve the problem of performance deterioration during the cycle of ternary cathode materials. On the one hand, the coating of non-electrochemically active oxide materials will reduce the capacity of ternary cathode materials to a certain extent, and the polarization of ternary cathode materials will also lead to the decline of cycle performance during the cycle. On the other hand, the coating layer formed by solid-phase coating of ternary cathode materials may be uneven, which cannot effectively inhibit the interface reaction between electrodes and electrolytic solution.

### Summary

Based on this, it is necessary to provide a coated ternary cathode material, and a preparation method and application thereof, which can improve the specific capacity and cycle performance of the battery.

An aspect of the present disclosure provides a coated ternary cathode material, which includes a ternary cathode material and a coating layer on a surface of the ternary cathode material, wherein the coating layer includes a layer of cobalt oxide chemically modified by alumina, and in the coating layer, the molar ratio of the alumina to the cobalt oxide is (0.001 -2): 100.

In one embodiment, the cobalt compound is one or more selected from cobalt sulfate, cobalt oxalate, cobalt acetate, cobalt carbonate and cobalt oxide; and/or
a molar ratio of the coating layer to the ternary cathode material is (0.001 -2): 100.

An aspect of the present disclosure further provides a preparation method of the coated ternary cathode material as described above, which includes the following steps:
dispersing a cobalt compound raw material and an aluminum source in a first solvent for reaction, then drying, and performing primary calcination to prepare the cobalt compound chemically modified by alumina, wherein a molar ratio of the aluminum source to the cobalt compound raw material is (0.001-2): 100; and
dispersing the cobalt compound chemically modified by the alumina and the ternary cathode material in a second solvent for reaction, then drying, and performing secondary calcination.

In one embodiment, the aluminum source is one or more selected from aluminum hydroxide, aluminum oxide, aluminum sulfate, aluminum carbonate and aluminum nitrate.

In one embodiment, the first solvent and the second solvent are each independently selected from anhydrous ethanol and/or anhydrous ether.

In one embodiment, calcination temperatures of the primary calcination and the secondary calcination are each independently 700°C to 900°C.

Another aspect of the present disclosure further provides a cathode plate, which includes a cathode current collector and a positive active material layer located on one or two sides of the positive current collector, wherein a cathode active material in the cathode active material layer is the coated ternary cathode material described above.

Yet another aspect of the present disclosure provides a secondary battery, which includes the cathode plate described above.

Still another aspect of the present disclosure provides an electrical apparatus, which includes the secondary battery described above.

The coated ternary cathode material provided above includes cobalt compound with electrochemical activity, so it will not lead to the decline of electrochemical activity of the ternary cathode material after coating modification. Compared with the traditional method of coating the ternary cathode material with electrochemically inert oxide layer, introducing cobalt compound into the coating layer can improve the structural instability of the ternary cathode material and avoid the problems such as gas generation, structural collapse and structural destruction of the ternary cathode material.

Further, the coating layer of cobalt compound is modified by alumina, which can isolate the direct contact between the active material in the ternary cathode material and the electrolytic solution, delay the side reaction between the active material and the electrolytic solution, and simultaneously stabilize the material structure, further improving the cycle performance and rate performance of the ternary cathode material.

In summary, the coated ternary cathode material prepared by the above preparation method has a stable interface layer (coating layer), which reduces the interface reaction between the coated ternary cathode material and the electrolytic solution, improves its cycle performance and reduces the internal resistance (DCR) of the battery, and enables high capacity and low metal leaching.

### Brief Description of Drawings

In order to more clearly illustrate the technical solutions in specific embodiments of the present disclosure or in the prior art, the drawings which needs to be used in the description of the specific embodiments or the prior art will be introduced briefly below. Apparently, the drawings described below are merely some embodiments of the present disclosure, and for those ordinarily skilled in the art, other drawings may be obtained in light of these drawings without creative effort.

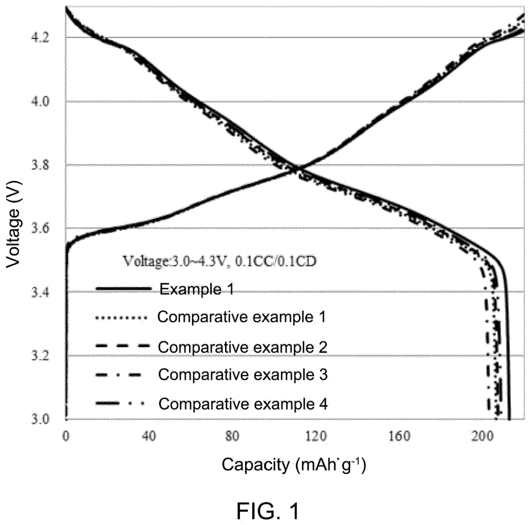

FIG. 1 is a graph showing the discharge capacities per gram of the coated modified NCM ternary cathode material prepared in Example 1 of the present disclosure and NCM ternary cathode materials prepared in Comparative Examples 1 to 4; and

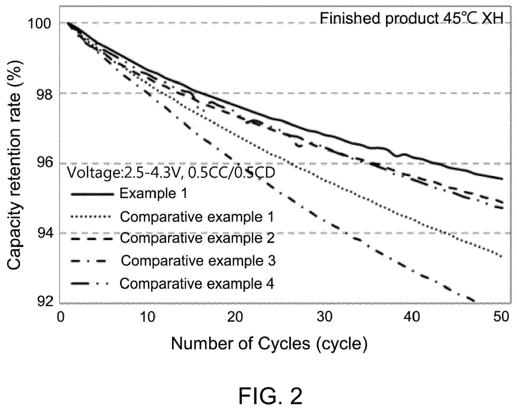

FIG. 2 is a graph showing the cycle performances of the coated modified NCM ternary cathode material prepared in Example 1 of the present disclosure and NCM ternary cathode materials prepared in Comparative Examples 1 to 4 at 45°C and 0.5 C.

### Detailed Description of Embodiments

Reference will now be made in detail to embodiments of the present disclosure, one or more examples of which are described below. Each example is provided as an illustration and not as a limitation on the present disclosure. In fact, it is obvious to those skilled in the art that various modifications and changes may be made to the present disclosure without departing from the scope or spirit of the present disclosure. For example, features illustrated or described as part of one embodiment may be used in another embodiment to obtain a further embodiment.

Therefore, it is intended that the present disclosure cover such modifications and changes that fall within the scope of the appended Claims and their equivalents. Other objects, features and aspects of the present disclosure are disclosed in or apparent from the following detailed description. It should be understood by those ordinarily skilled in the art that this discussion is only a description of exemplary embodiments, and is not intended to limit the broader aspects of the present disclosure.

Unless otherwise defined, all technical and scientific terms used herein have the same meaning as commonly understood by those skilled in the art of the present disclosure. The terms used herein in the specification of the present disclosure is only for the purpose of describing specific embodiments and is not intended to limit the present disclosure. As used herein, the term "and/or" includes any and all combinations of one or more related listed items.

### Terms and definitions:

"Chemical modification" refers to the process of attaching an active group or substance, etc. to the surface of a substrate by adsorption, coating, polymerization and chemical reaction, etc., to protect or improve the characteristics and functions of the substrate. For example, in the present disclosure, chemical modification means that alumina is loaded on a cobalt compound, and alumina and the cobalt compound form a solid solution.

An aspect of the present disclosure provides a coated ternary cathode material, which includes a ternary cathode material and a coating layer on a surface of the ternary cathode material, wherein the coating layer includes a layer of cobalt compound chemically modified by alumina. In the coating layer, a molar ratio of the alumina to the cobalt compound is (0.001-2): 100.

The coated ternary cathode material provided above includes cobalt compound with electrochemical activity, so it will not lead to the decline of electrochemical activity of the ternary cathode material after coating modification. Compared with the traditional method of coating the ternary cathode material with electrochemically inert oxide layer, introducing cobalt compound into the coating layer can improve the structural instability of the ternary cathode material and avoid the problems such as gas generation, structural collapse and structural destruction of the ternary cathode material.

Further, the coating layer of cobalt compound is modified by alumina, which can isolate the direct contact between the active material in the ternary cathode material and the electrolytic solution, delay the side reaction between the active material and the electrolytic solution, and simultaneously stabilize the material structure, further improving the cycle performance and rate performance of the ternary cathode material.

In summary, the coated ternary cathode material described above has a stable interface layer (coating layer), which reduces the interface reaction between the coated ternary cathode material and the electrolytic solution, improves its cycle performance and reduces the internal resistance (DCR) of the battery, and enables high capacity and low metal leaching.

In some embodiments, the structural formula of the ternary cathode material is LiNiₓCo_{y}Mn_{z}O₂, where 0.6≤x≤1, 0≤y≤0.5, 0≤z≤0.5, and x+y+z=1.

In some embodiments, in the coating layer, the molar ratio of the alumina to the cobalt compound maybe any value between 0.001:100 and 2:100, for example, it may also be 0.001:100, 0.005:100, 0.008:100, 0.01:100, 0.02:100, 0.05:100, 0.05:100, 0.08:100, 0.1:100, 0.3:100, 0.5:100, 0.7:100, 0.9:100, 1:100, 1.1:100, 1.2:100, 1.4:100, 1.5:100, 1.8:100, and 2:100. The electrochemical performance of the coated ternary cathode material can be ensured by adjusting the molar ratio of the alumina to the cobalt oxide within the above range. When the alumina content is too low, the direct contact between the active material in the ternary cathode material and the electrolytic solution cannot be effectively isolated, so the side reaction between the electrode active material and the electrolytic solution cannot be effectively inhibited. When the alumina content is too high, it will affect the formation of lithium ion transport and diffusion channel, which will lead to a significant decrease in its capacity and affect its use.

In some embodiments, the molar ratio of the coating layer to the ternary cathode material may be any value between 0.001 :100 and 2:100, for example, it may also be 0.001:100, 0.005:100, 0.008:100, 0.01:100, 0.02:100, 0.05:100, 0.05:100,0.08:100,0.1:100, 0.3:100, 0.5:100, 0.7:100, 0.9:100, 1:100, 1.1:100, 1.2:100, 1.4:100, 1.5:100, 1.8:100, and 2:100. When the content of the coating layer is too low, effective coating cannot be formed, and it is difficult to effectively inhibit the corrosion of the cathode material by the electrolytic solution. However, when the content of the coating layer is too high and the coating layer is too thick, it will affect the formation of lithium ion transport and diffusion channel, which will lead to a significant decrease in its capacity and affect its use.

In some embodiments, the selection of the cobalt compound is not limited, and a cobalt compound commonly used in the art may be selected, for example, including but not limited to one or more of cobalt sulfate, cobalt oxalate, cobalt acetate, cobalt carbonate and cobalt oxide. Preferably, the cobalt compound is cobalt oxide.

An aspect of the present disclosure further provides a preparation method of the coated ternary cathode material as described above, which includes steps S100 to S200.

S100: dispersing a cobalt compound raw material and an aluminum source in a first solvent for reaction, then drying, and performing primary calcination to obtain the cobalt compound chemically modified by alumina, wherein a molar ratio of the aluminum source to the cobalt compound raw material is (0.001-2): 100.

It can be understood that dispersing the cobalt compound raw material and the aluminum source in the first solvent may refer to that the cobalt compound raw material and the aluminum source are respectively dispersed in the first solvent to form respective solutions, and then the respective solutions are mixed; alternatively, that the cobalt compound raw material and the aluminum source are dispersed together in the first solvent; or that the cobalt compound raw material is first dispersed in the first solvent to form a solution, and then the aluminum source is added. Specifically, the cobalt compound raw material may be dispersed in the mixed solution of water and anhydrous ether, and then the aluminum source and anhydrous ethanol may be added.

In some embodiments, the particle size of the cobalt compound may be any value between 50 nm and 300 nm, for example, it may also be 80 nm, 100 nm, 120 nm, 150 nm, 180 nm, 200 nm, 250 nm, and 280 nm.

In some embodiments, the aluminum source may be one or more selected from aluminum hydroxide, alumina, aluminum sulfate, aluminum carbonate and aluminum nitrate.

Preferably, the particle size of the aluminum source may be any value between 20 nm and 40 nm, for example, it may also be 25 nm, 30 nm, and 35 nm.

In some embodiments, in order to fully disperse the cobalt compound and the aluminum source in the first solvent, a dispersion technology commonly used in the art, such as mechanical stirring, may also be used in the dispersion process, wherein the stirring speed is not limited, for example, it may be 500 r/min to 1000 r/min.

In some embodiments, the first solvent may be a solvent commonly used in the art, for example, it may be anhydrous ethanol, anhydrous ether, or a mixed solvent formed by them. It can be understood that water may be present in the first solvent.

In some embodiments, the temperature and time of the primary calcination are not limited, for example, the temperature may be 700°C to 900°C and the time may be 8 h to 12 h.

In some embodiments, the drying method in step S100 is not limited, for example, it may be heat drying or water bath heating, as long as it can remove the first organic solvent. In the above, the temperature and time of the water bath heating are not limited, for example, it may be heated in water bath at 80°C to 90°C for 5 h to 7 h.

Step S200: dispersing the cobalt compound chemically modified by the alumina, and the ternary cathode material in a second organic solvent for reaction, then drying, and performing primary calcination.

In some embodiments, in order to fully disperse the cobalt compound loaded with alumina, and the ternary cathode material in the second solvent, a dispersion technology commonly used in the art, such as mechanical stirring, may also be used in the dispersion process, wherein the stirring speed is not limited, for example, it may be 500 r/min to 1000 r/min.

In some embodiments, the second solvent may be a solvent commonly used in the art, for example, it may be anhydrous ethanol, anhydrous ether, or a mixed solvent formed by them. It can be understood that water may be present in the second solvent.

In some embodiments, the temperature and time of the secondary calcination are not limited, for example, the temperature may be 700°C to 900°C and the time may be 8 h to 12 h.

In some embodiments, the drying method in step S200 is not limited, for example, it may be heat drying or water bath heating, as long as it can remove the first organic solvent. Water bath heating is preferred. In the above, the temperature and time of the water bath heating are not limited, for example, it may be heated in water bath at 80°C to 90°C for 5 h to 7 h.

In some embodiments, after the secondary calcination, a grinding step is further included, wherein the speed and way of grinding are not limited, and the grinding technology commonly used in the art may be selected.

Another aspect of the present disclosure further provides a cathode plate, which includes a positive current collector and a cathode active material layer located on one or two sides of the positive current collector, wherein a cathode active material in the cathode active material layer is the coated ternary cathode material described above.

In the present disclosure, the selection of the positive current collector is not limited, and in some embodiments, the positive current collector is aluminum foil. In the above, the method of forming the cathode active material layer on the positive current collector may be any method commonly known in the art, such as coating process, magnetron sputtering process, etc. The parameters of the coating process and the magnetron sputtering process may also refer to the process parameters commonly known in the art.

Yet another aspect of the present disclosure provides a secondary battery, which includes the cathode plate described above.

In some embodiments, the secondary battery is a lithium secondary battery.

It can be understood that the lithium secondary battery may also include other necessary structures required by the battery, such as an anode plate, a separator, an electrolyte, etc. In the above, the specific material and type of the anode plate are not limited. As an example, the anode plate may be only a carbon anode material or consist of a carbon anode material and a negative current collector, wherein the carbon anode material includes one or more of artificial graphite, natural graphite, graphitized carbon fiber, graphitized medium carbon microbeads, fullerenes and amorphous carbon; and the negative current collector may be copper foil.

The separator may include any known separator, and may be specifically selected from polyolefin-based polymer films, which may include polypropylene and polyethylene. It can be understood that the polyolefin-based polymer films may be multilayer films, microporous films, woven or nonwoven fabrics. The main function of the separator is to prevent short circuit between the cathode and the anode, and to provide a channel for lithium ions.

The electrolyte may be solid electrolyte or electrolytic solution, specifically electrolytic solution formed by lithium salt and organic solvent. The lithium salt may be one or more of LiPF₆, LiBF₄, LiSbF₆ and LiAsF₆, and the organic solvent is mainly selected from solvents of carbonic ester, such as ethylene carbonate (EC), methyl ethyl carbonate (EMC) and diethyl carbonate (DEC), etc.

Still another aspect of the present disclosure provides an electrical apparatus, which adopts the lithium ion battery described above as a pow source.

In some embodiments, the electrical apparatus is a device with a lithium secondary battery as the power supply apparatus. As an example, the electrical apparatus may be a small electronic device (such as mobile phone, personal digital assistant, notebook computer, camera, portable game console, etc.), a large traffic transportation apparatus such as a vehicle (such as hybrid vehicle, electric vehicle, etc.), or an electric tool (such as electric drill, electric hammer, electric saw, cutting machine, etc.).

The present disclosure will be further described in detail with reference to specific examples and comparative examples.

### Example 1

1) According to the molar ratio of the cobalt oxide to the ternary cathode material (LiNi_{0.8}Co_{0.1}Mn_{0.1}O₂) of 1.5:100, a certain amount of cobalt hydroxide with the particle size of 200 nm was weighed, 140 g of deionized water and 60 g of anhydrous ether were added, and then stirred at a speed of 800 r/min for 1 h to obtain an active slurry.
2) The active slurry obtained in step 1) was taken, and aluminum hydroxide and anhydrous ethanol were added, wherein the particle size of the aluminum hydroxide was 30 nm. Then it was dispersed at a speed of 500 r/min for 10 min, then added with anhydrous ethanol and aluminum hydroxide again, and dispersed at a speed of 1000 r/min for 30 min to obtain a first suspension with a solid content of 60%, wherein the molar ratio of the aluminum hydroxide to the cobalt hydroxide in the first suspension was 1:100. Then, the first suspension was dried, and then sintered at 700°C for 10 h to obtain a cobalt oxide material uniformly modified by alumina.
3) The ternary cathode material and the cobalt oxide material uniformly modified by alumina obtained in step 2) were added with anhydrous ethanol, and dispersed at a speed of 500 r/min for 5 min. Then, the anhydrous ethanol and the ternary cathode material were added again, and stirred at a speed of 1000 r/min for 30 min to obtain a second suspension with a solid content of 65%, wherein the molar ratio of the cobalt oxide material obtained in step 2) to the ternary cathode material in the second suspension was 1.5:100. Then, the stirring speed was reduced to 300 r/min, and it was heated in a water bath at 80°C to 90°C for 6 h, and the anhydrous ethanol in the second suspension was removed to obtain mixed powder. Then, the mixed powder was calcined at 750°C for 10 h, cooled and ground to obtain the coated ternary cathode material.

The coated ternary cathode material described above was prepared into a CR2032 button battery, and the battery capacity was tested by charging at a constant current and a constant voltage and discharging at a constant current, with the test voltage ranging from 3.0 V to 4.3 V and the charging and discharging current of 0.1 C. The cyclic decay test method included: (1) letting it stand for 40min; (2) fast charging, that is, charging at a constant current of 0.5 C, charging at a constant voltage after charged to 4.25 V, and ending charging when the current was less than 0.05 C; (3) letting it stand for 40min; (4) discharging at a constant current of 0.5C, and ending discharging when the terminal voltage was less than 2.5 V; and (5) repeating the above steps cyclically. It was obtained by test that the specific discharge capacity of the coated ternary cathode material was 213.0 mAh/g, and the capacity retention rate after 50 cycles was 95.60%.

### Example 2

The preparation method of this example was basically the same as that of Example 1, except that the molar ratio of the aluminum hydroxide to the cobalt hydroxide was 0.005:100, and the molar ratio of the cobalt oxide material to the ternary cathode material was 1.5:100. The specific steps were as follows.
1) According to the molar ratio of the cobalt oxide to the ternary cathode material (LiNi_{0.6}Co_{0.2}Mn_{0.2}O₂) of 1.5:100, a certain amount of cobalt hydroxide with the particle size of 200 nm was weighed, 140 g of deionized water and 60 g of anhydrous ether were added, and then stirred at a speed of 800 r/min for 1 h to obtain an active slurry.
2) The active slurry obtained in step 1) was added with aluminum hydroxide and anhydrous ethanol, wherein the particle size of the aluminum hydroxide was 30 nm. Then it was dispersed at a speed of 500 r/min for 10 min, then added with anhydrous ethanol and aluminum hydroxide again, and dispersed at a speed of 1000 r/min for 30 min to obtain a first suspension with a solid content of 60%, wherein the molar ratio of the aluminum hydroxide to the cobalt hydroxide in the first suspension was 0.005:100. Then, the first suspension was dried, and then sintered at 700°C for 10 h to obtain a cobalt oxide material uniformly modified by alumina.
3) The ternary cathode material and the modified cobalt oxide material obtained in step 2) were added with anhydrous ethanol, and dispersed at a speed of 500 r/min for 5 min. Then, the anhydrous ethanol and the ternary cathode material were added again, and stirred at a speed of 1000 r/min for 30 min to obtain a second suspension with a solid content of 65%, wherein the molar ratio of the cobalt oxide material obtained in step 2) to the ternary cathode material in the second suspension was 1.5:100. Then, the stirring speed was reduced to 300 r/min, and it was heated in a water bath at 80°C to 90°C for 6 h, and the anhydrous ethanol in the second suspension was removed to obtain mixed powder. Then, the mixed powder was calcined at 750°C for 10 h, cooled and ground to obtain the coated ternary cathode material.

### Example 3

The preparation method of this example was basically the same as that of Example 1, except that the molar ratio of the aluminum hydroxide to the cobalt hydroxide was 2:100, and the molar ratio of the cobalt oxide material to the ternary cathode material was 2:100. The specific steps were as follows.
1) According to the molar ratio of the cobalt oxide to the ternary cathode material (LiNi_{0.9}Co_{0.05}Mn_{0.05}O₂) of 2:100, a certain amount of cobalt hydroxide with the particle size of 200 nm was weighed, 140 g of deionized water and 60 g of anhydrous ether were added, and then stirred at a speed of 800 r/min for 1 h to obtain an active slurry;
2) The active slurry obtained in step 1) was taken, and aluminum hydroxide and anhydrous ethanol were added, wherein the particle size of the aluminum hydroxide was 30 nm. Then it was dispersed at a speed of 500 r/min for 10 min, then added with anhydrous ethanol and aluminum hydroxide again, and dispersed at a speed of 1000 r/min for 30 min to obtain a first suspension with a solid content of 60%, wherein the molar ratio of the aluminum hydroxide to the cobalt hydroxide in the first suspension was 2:100. Then, the first suspension was dried, and then sintered at 700°C for 10 h to obtain a cobalt oxide material uniformly modified by alumina.
3) The ternary cathode material and the cobalt material obtained in step 2) were taken, anhydrous ethanol was added, and dispersed at a speed of 500 r/min for 5 min. Then, the anhydrous ethanol and the ternary cathode material were added again, and stirred at a speed of 1000 r/min for 30 min to obtain a second suspension with a solid content of 65%, wherein the molar ratio of the cobalt material obtained in step 2) to the ternary cathode material in the second suspension was 2:100. Then, the stirring speed was reduced to 300 r/min, and it was heated in a water bath at 80°C to 90°C for 6 h, and the anhydrous ethanol in the second suspension was removed to obtain mixed powder. Then, the mixed powder was calcined at 750°C for 10 h, cooled and ground to obtain the coated ternary cathode material.

### Comparative Example 1

The preparation method of this comparative example was basically the same as that of Example 1, except that the coating layer was a cobalt oxide layer which was not modified by alumina, and the specific steps were as follows.
1) According to the molar ratio of the cobalt oxide to the ternary cathode material (LiNi_{0.8}Co_{0.1}Mn_{0.1}O₂) of 2:100, a certain amount of cobalt hydroxide with the particle size of 200 nm was weighed, 140 g of deionized water and 60 g of anhydrous ether were added, and then stirred at a speed of 800 r/min for 1 h to obtain an active slurry;
2) The active slurry obtained in step 1) and the ternary cathode material were added with anhydrous ethanol, and stirred for 30 min at a speed of 1000 r/min to obtain a second suspension with a solid content of 65%, wherein the molar ratio of the cobalt oxide material to the ternary cathode material obtained in the second suspension was 2:100. Then, the stirring speed was reduced to 300 r/min, and it was heated in a water bath at 80°C to 90°C for 6 h, and the anhydrous ethanol in the second suspension was removed to obtain mixed powder. Then, the mixed powder was calcined at 750°C for 10 h, cooled and ground to obtain the coated ternary cathode material.

The coated ternary cathode material described above was prepared into a CR2032 button battery, and it was obtained by test that the specific discharge capacity of the ternary cathode material was 206.7 mAh/g, and the capacity retention rate after 50 cycles was 93.45%.

### Comparative Example 2

The preparation method of this comparative example was basically the same as that of Example 1, except that the coating layer only contained alumina material, and the specific steps were as follows.
1) A certain amount of aluminum hydroxide with a particle size of 30 nm was weighed, and added with anhydrous ethanol, then dispersed for 10 min at a speed of 500 r/min, added with anhydrous ethanol again, and dispersed for 30 min at a speed of 1000 r/min to obtain a first suspension with a solid content of 60%. Then, the first suspension was dried, and then sintered at 700°C for 10 h to obtain alumina material.
2) The ternary cathode material (LiNi_{0.8}Co_{0.1}Mn_{0.1}O₂) and the alumina material obtained in step 1) were added with anhydrous ethanol, and dispersed at a speed of 500 r/min for 5 min. Then, anhydrous ethanol and the ternary cathode material were added again, and stirred at a speed of 1000 r/min for 30 min to obtain a second suspension with a solid content of 65%, wherein the molar ratio of alumina material to the ternary cathode material in the second suspension was 1.5:100. Then, the stirring speed was reduced to 300 r/min, and it was heated in a water bath at 80°C to 90°C for 6 h, and the anhydrous ethanol in the second suspension was removed to obtain mixed powder. Then, the mixed powder was calcined at 750°C for 10 h, cooled and ground to obtain the coated ternary cathode material.

The coated ternary cathode material described above was prepared into a CR2032 button battery, and it was obtained by test that the specific discharge capacity of the ternary cathode material was 207.5mAh/g, and the capacity retention rate after 50 cycles was 94.88%.

### Comparative Example 3

The preparation method of this comparative example was basically the same as that of Example 1, except that aluminum hydroxide was replaced by iron oxide, and the specific steps were as follows.
1) According to the molar ratio of the cobalt oxide to the ternary cathode material (LiNi_{0.8}Co_{0.1}Mn_{0.1}O₂) of 1.5:100, a certain amount of cobalt hydroxide with the particle size of 200 nm was weighed, 140 g of deionized water and 60 g of anhydrous ether were added, and then stirred at a speed of 800 r/min for 1 h to obtain an active slurry.
2) The active slurry obtained in step 1) was added with iron oxide and anhydrous ethanol, wherein the particle size of iron oxide was 30 nm. Then it was dispersed at a speed of 500 r/min for 10 min, anhydrous ethanol and cobalt hydroxide were added again, and dispersed at a speed of 1000 r/min for 30 min to obtain the first suspension with a solid content of 60%, wherein the molar ratio of iron oxide to cobalt hydroxide in the first suspension was 1:100. Then, the first suspension was dried, and then sintered at 700°C for 10 h to obtain cobalt oxide material uniformly modified by iron oxide.
3) The ternary cathode material and the cobalt oxide material modified by iron oxide obtained in step 2) were added with anhydrous ethanol, and dispersed at a speed of 500 r/min for 5 min. Then, the anhydrous ethanol and the ternary cathode material were added again, and stirred at a speed of 1000 r/min for 30 min to obtain a second suspension with a solid content of 65%, wherein the molar ratio of the cobalt oxide material obtained in step 2) to the ternary cathode material in the second suspension was 1.5:100. Then, the stirring speed was reduced to 300 r/min, and it was heated in a water bath at 80°C to 90°C for 6 h, and the anhydrous ethanol in the second suspension was removed to obtain mixed powder. Then, the mixed powder was calcined at 750°C for 10 h, cooled and ground to obtain the coated ternary cathode material.

The coated ternary cathode material described above was prepared into a CR2032 button battery, and it was obtained by test that the specific discharge capacity of the ternary cathode material was 203.5 mAh/g, and the capacity retention rate after 50 cycles was 91.67%.

### Comparative Example 4

This comparative example was basically the same as the preparation method of Example 1, except that the molar ratio of the aluminum hydroxide to the cobalt hydroxide was 4:100, and the molar ratio of the cobalt oxide material to the ternary cathode material was 1.5:100. The specific steps were as follows.
1) According to the molar ratio of the cobalt oxide to the ternary cathode material (LiNi_{0.8}Co_{0.1}Mn_{0.1}O₂) of 1.5:100, a certain amount of cobalt hydroxide with the particle size of 200 nm was weighed, 140 g of deionized water and 60 g of anhydrous ether were added, and then stirred at a speed of 800 r/min for 1 h to obtain an active slurry.
2) The active slurry obtained in step 1) was added with aluminum hydroxide and anhydrous ethanol, wherein the particle size of the aluminum hydroxide was 30 nm. Then it was dispersed at a speed of 500 r/min for 10 min, then added with anhydrous ethanol and aluminum hydroxide again, and dispersed at a speed of 1000 r/min for 30 min to obtain a first suspension with a solid content of 60%, wherein the molar ratio of the aluminum hydroxide to the cobalt hydroxide in the first suspension was 4:100. Then, the first suspension was dried, and then sintered at 700°C for 10 h to obtain a cobalt oxide material uniformly modified by alumina.
3) The ternary cathode material and the cobalt oxide material modified by alumina obtained in step 2) were added with anhydrous ethanol, and dispersed at a speed of 500 r/min for 5 min. Then, anhydrous ethanol and the ternary cathode material were added again, and stirred at a speed of 1000 r/min for 30 min to obtain a second suspension with a solid content of 65%, wherein the molar ratio of the cobalt oxide material obtained in step 2) to the ternary cathode material in the second suspension was 1:100. Then, the stirring speed was reduced to 300 r/min, and it was heated in a water bath at 80°C to 90°C for 6 h, and the anhydrous ethanol in the second suspension was removed to obtain mixed powder. Then, the mixed powder was calcined at 750°C for 10 h, cooled and ground to obtain the coated ternary cathode material.

The coated ternary cathode material described above was prepared into a CR2032 button battery, and it was obtained by test that the specific discharge capacity of the ternary cathode material was 203.5 mAh/g, and the capacity retention rate after 50 cycles was 91.67%.

The electrochemical performances of the ternary cathode materials prepared in Example 1 and Comparative Examples 1 to 4 are shown in Table 1:

**Table 1**

| Group | First discharge capacity per gram at 0.1 C (mAh/g) | First efficiency (%) | Capacity retention rate after 50 cycles at 45°C (%) |
|---|---|---|---|
| Example 1 | 213.0 | 91.36 | 95.60 |
| Comparative Example 1 | 206.7 | 90.49 | 93.45 |
| Comparative Example 2 | 207.5 | 90.91 | 94.88 |
| Comparative Example 3 | 203.5 | 90.48 | 91.67 |
| Comparative Example 4 | 209.2 | 91.10 | 94.73 |

As can be seen from the above table, the coated ternary cathode material provided by the present disclosure has more excellent electrochemical performances after being coated with cobalt oxide modified by alumina.

The technical features of the above-mentioned embodiments may be combined arbitrarily. In order to make the description concise, not all possible combinations of the technical features in the above embodiments are described. However, these technical features, as long as there is no contradiction between the combinations thereof, should be considered as falling within the scope of this specification.

The above-mentioned embodiments only show several embodiments of the present disclosure, and their descriptions are more specific and detailed, but they cannot be understood as limiting the scope of the present disclosure. It should be pointed out that those ordinarily skilled in the art may make, without departing from the concept of the present disclosure, a number of variations and improvements, which shall fall within the scope of protection of the present disclosure. Therefore, the scope of protection of the present disclosure should be subject to the appended Claims.

## Claims

1. A coated ternary cathode material, **characterized by** comprising a ternary cathode material and a coating layer on a surface of the ternary cathode material, wherein the coating layer comprises a layer of cobalt compound chemically modified by alumina.

2. The coated ternary cathode material according to claim 1, wherein the cobalt compound comprises one or more selected from the group consisting of cobalt sulfate, cobalt oxalate, cobalt acetate, cobalt carbonate and cobalt oxide.

3. The coated ternary cathode material according to claim 1 or 2, wherein in the coating layer, a molar ratio of the alumina to the cobalt compound is (0.001-2): 100.

4. The coated ternary cathode material according to claim 1, wherein a molar ratio of the coating layer to the ternary cathode material is (0.001-2): 100.

5. A preparation method of the coated ternary cathode material according to any one of claims 1 to 4, comprising following steps:
dispersing a cobalt compound raw material and an aluminum source in a first solvent for reaction, then drying, and performing primary calcination to prepare a cobalt compound chemically modified by alumina, wherein a molar ratio of the aluminum source to the cobalt compound raw material is (0.001-2):100; and
dispersing the cobalt compound chemically modified by the alumina, and the ternary cathode material in a second solvent for reaction, then drying, and performing secondary calcination.

6. The preparation method of the coated ternary cathode material according to claim 5, wherein the aluminum source comprises one or more selected from the group consisting of aluminum hydroxide, alumina, aluminum sulfate, aluminum carbonate and aluminum nitrate.

7. The preparation method of the coated ternary cathode material according to claim 5, wherein the first solvent and the second solvent are each independently at least one selected from the group consisting of anhydrous ethanol and anhydrous ether.

8. The preparation method of the coated ternary cathode material according to any one of claims 5 to 7, wherein calcination temperatures of the primary calcination and the secondary calcination are each independently 700°C to 900°C.

9. A cathode plate, comprising a positive current collector and a cathode active material layer located on one or two sides of the positive current collector, wherein a cathode active material in the cathode active material layer is the coated ternary cathode material according to any one of claims 1 to 4.

10. A secondary battery, comprising the cathode plate according to claim 9.

11. An electrical apparatus, comprising the secondary battery according to claim 10.
